# EUROPEAN PATENT APPLICATION

(11) **EP 3 166 203 A1**
(43) Date of publication of application: **10.05.2017**
(21) Application number: 15814891.6
(22) Date of filing: 01.07.2015
(51) Int. Cl.: H02J 50/00

(54) **POWER-RECEIVING DEVICE, CONTACTLESS POWER SUPPLY SYSTEM, AND POWER-FEEDING DEVICE**

(30) Priority: 03.07.2014 JP 2014137880; 19.12.2014 JP 2014257201
(71) Applicant: IHI Corporation, Tokyo 135-8710 (JP)
(72) Inventor: MURAYAMA Takahiko, Tokyo 135-8710 (JP); TAKATSU Yuji, Tokyo 135-8710 (JP); BANDO Takayoshi, Tokyo 135-8710 (JP); MAEKAWA Yuji, Tokyo 135-8710 (JP); ARAKI Jun, Tokyo 135-8710 (JP)
(74) Representative: Grünecker Patent- und Rechtsanwälte PartG mbB
(86) International application number: PCT/JP2015/068981
(87) International publication number: WO 2016/002839

(57) **Abstract**

A power-receiving device (R) is provided with a load circuit (13) including a load and a switching element that are connected in series between a pair of output terminals of a power-receiving side power converter (12). The load of the load circuit (13) has such a resistance value that the voltage of elements of a power-receiving side pad (11) or the power-receiving side power converter (12) does not reach a breakdown voltage before a power-transmission device (S) stops power transmission to the power-receiving device (R) after the power-receiving device (R) and the load device (B) are disconnected from each other.

## Description

### Technical Field

This disclosure relates to a power-receiving device, a wireless power-transmitting system, and a power-transmission device.

Priority is claimed on Japanese Patent Application No. 2014-137880, filed on July 3,2014, and Japanese Patent Application No. 2014-257201, filed on December 19, 2014, the contents of which are incorporated herein by reference.

### Background Art

Patent Document 1 discloses a wireless power-transmitting system that includes a power-transmitting facility that has a primary self-resonance coil, a power-receiving device, such as a hybrid car, which has a secondary self-resonance coil that receives power from the primary self-resonance coil via an electromagnetic field and charges a battery with the received power, and a control device that controls a high-frequency power source device, thereby controlling transmission of power from the primary self-resonance coil to the secondary self-resonance coil.

Additionally, Patent Document 2 and Patent Document 3 also suggest wireless power-transmitting systems each of which wirelessly transmits power using a magnetic field. In the related art, in a case where the power-receiving device of a wireless power-transmitting system is mounted on a mobile vehicle, such as an automobile, a switch for protecting the battery from an overvoltage or an overcurrent is provided between the above power-receiving device and the battery that stores the power supplied from the power-receiving device. However, while a power-transmission device of the wireless power-transmitting system transmits power to the power-receiving device, the above switch may be brought into an open state unintentionally due to various factors, such as a malfunction. Since power cannot be supplied to the battery if the transmission of power continues with the switch being open, the voltage inside the power-transmission device and the power-receiving device rises, an overvoltage is applied to elements that constitute the power-transmission device and the power-receiving device, and damage to the elements, the power-transmission device, and the power-receiving device may be caused. Thus, for example, as shown in Patent Document 2, a technique in which the open state of the switch is detected and the power-transmission device stops power transmission is suggested. The power-transmission device described in Patent Document 2 stops power transmission in a case where a current supplied from a power source is detected and a change in the detected current is equal to or higher than a threshold value. That is, the power-transmission device detects a change in a current generated due to a change in impedance caused when the switch is brought into the open state, and stops power transmission.

### Citation List

### Patent Document

[Patent Document 1] Japanese Unexamined Patent Application, First Publication No. 2010-252446
[Patent Document 2] Japanese Unexamined Patent Application, First Publication No. 2013-225962
[Patent Document 3] Japanese Unexamined Patent Application, First Publication No. 2011-45195

### Summary of Invention

### Technical Problem

In the above related art, generally, in order to protect the battery from an overvoltage or an overcurrent, the switch is provided, and in a case where the switch is in the open state at the time of power transmission, the power-receiving device sends a power transmission stop request to the power-transmission device. However, there is a possibility in that the voltage of the elements in the power-receiving pad or the power-receiving side power converter of the power-receiving device rises due to the power supplied from the power-transmission device after sending the power transmission stop request until power transmission is actually stopped, and the elements arc damaged.

This disclosure is made in view of the above-described circumstances, and an object thereof is to prevent damage to elements.

### Solution to Problem

In order to achieve the above object, a first aspect of the disclosure is a power-receiving device including a power-receiving side pad that receives power supplied wirelessly from a power-transmission device, and a power-receiving side power converter that converts the power received by the power-receiving side pad and supplies the converted power to a load device. The power-receiving device includes a load circuit including a load and a switching element that are connected in series between a pair of output terminals of the power-receiving side power converter. The switching element is switched from a disconnected state to a connected state when the power-receiving device and the load device are disconnected from each other. The load of the load circuit has such a resistance value that the voltage of elements of the power-receiving side pad or the power-receiving side power converter does not reach a breakdown voltage before the power-transmission device stops power transmission to the power-receiving device after the power-receiving device and the load device are disconnected from each other.

Additionally, a second aspect of the disclosure is a wireless power-transmitting system including a power-receiving device that supplies wirelessly transmitted power to a load device; and a power-transmission device that wirelessly transmits power to the power-receiving device. The power-receiving device includes a load circuit that includes a load and a switching element and in which the wirelessly transmitted power is supplied to the load in a case where the switching element is in a connected state. The switching element is switched from a disconnected state to the connected state when the power-receiving device and the load device are disconnected from each other. The power-transmission device includes a detecting unit that detects power transmission status information, and a power-transmission side control unit that stops power transmission to the power-receiving device on the basis of the power transmission status information.

### Effects of Invention

According to the power-receiving device, the wireless power-transmitting system, and the power-transmission device of this disclosure, damage to the elements can be prevented.

### Brief Description of Drawings

FIG. 1 is a functional block diagram of a wireless power-transmitting system that constitutes a power-receiving device related to a first embodiment of the disclosure.
FIG. 2 is a circuit diagram of the wireless power-transmitting system that constitutes the power-receiving device related to the first embodiment of the disclosure.
FIG. 3 is a graph showing the output voltage of a power-receiving side rectifier circuit of the power-receiving device related to the first embodiment of the disclosure.
FIG. 4 is a functional block diagram of a wireless power-transmitting system related to a second embodiment of the disclosure.
FIG. 5 is a circuit diagram of the wireless power-transmitting system related to the second embodiment of the disclosure.
FIG. 6 is a graph showing the output voltage of a power-receiving side rectifier circuit of a power-receiving device of the wireless power-transmitting system related to the second embodiment of the disclosure.

### Description of Embodiments

Hereinafter, a first embodiment of this disclosure will be described with reference to the drawings.

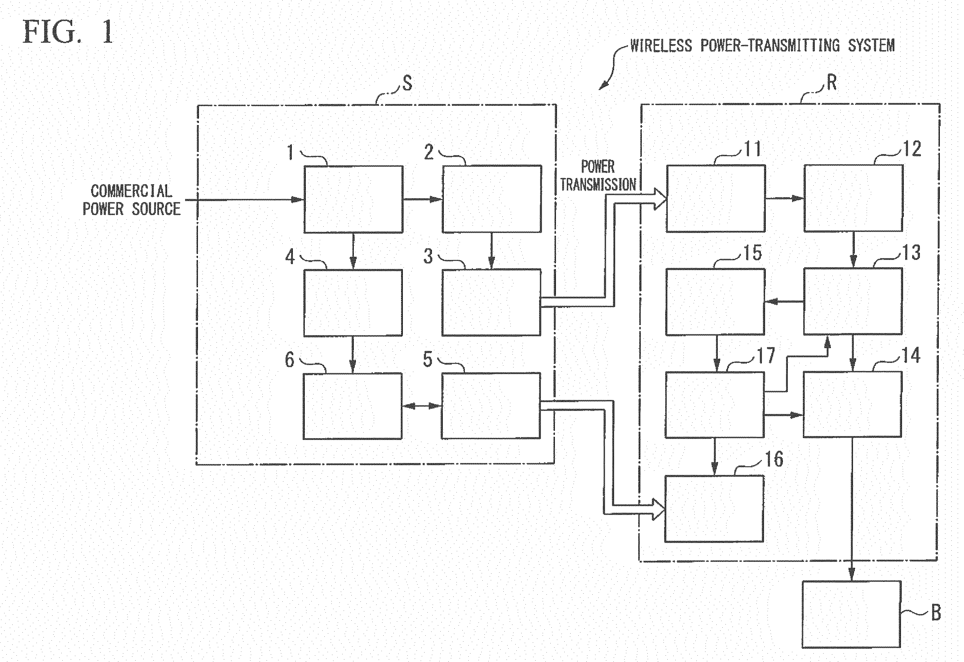

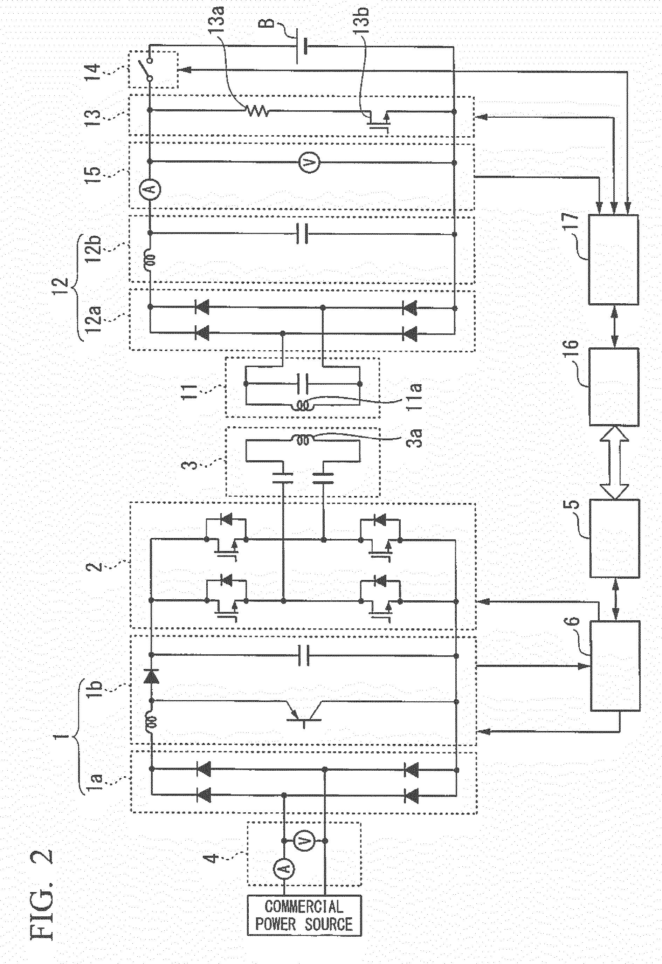

A power-receiving device R related to the first embodiment constitutes a portion of a wireless power-transmitting system. The wireless power-transmitting system, as shown in Figs. 1 and 2, is constituted by a power-transmission device S and the power-receiving device R. Additionally, as shown in the drawings, the power-transmission device S is constituted of a power-transmission side power converter 1, an inverter circuit 2, a power-transmission side pad 3, a power-transmission side current/voltage sensor 4, a power-transmission side communication unit 5, and a power-transmission side control unit 6.

The power-receiving device R is constituted of a power-receiving side pad 11, a power-receiving side power converter 12, a load circuit 13, a switch 14, a power-receiving side current/voltage sensor 15, a power-receiving side communication unit 16, and a power-receiving side control unit 17.

The power-transmission device S is a device that is fixed and arranged in a power-transmission facility provided on the ground and wirelessly supplies AC power to the power-receiving device R provided at a movable body. The power-transmission facility is a facility in which a single vehicle stop space for the movable body or a plurality of vehicle stop spaces for the movable body are provided, and includes power-transmission devices S equivalent to the number of vehicle stop spaces. The power-receiving device R is a device that is provided in the movable body and charges a battery B (load device) by converting the AC power supplied from the power-transmission device S into DC power. In addition, the movable body is, for example, a vehicle, such as an electric car or a hybrid car, which requires the power reception from the outside.

In the power-transmission device S, the power-transmission side power converter 1 is constituted of a power-transmission side rectifier circuit 1a and a chopper circuit 1b.

The power-transmission side rectifier circuit 1a is, for example, a diode bridge, and performs full-wave rectification of the commercial power (for example, single-phase 100 v, 50 Hz) supplied from an external commercial power source, and outputs the full-wave rectified power to the chopper circuit 1b. The power (full-wave rectified power) supplied to the chopper circuit 1b from the power-transmission side rectifier circuit 1a is a monopolar (for example, positive polarity) pulsating current in which commercial sinusoidal power is folded at a zero cross point.

The chopper circuit 1b adjusts its output voltage to output the adjusted output to the inverter circuit 2 by the switching operation thereof being controlled by the power-transmisson-side control unit 6. Specifically, the chopper circuit 1b is a step-up chopper circuit or a step-up/down chopper circuit, and steps up and down the power input from the power-transmission side rectifier circuit 1a to output the stepped-up/down power. The output of the chopper circuit 1b is DC power obtained by full-wave rectified power that is a pulsating current being sufficiently smoothed by virtue of the function of a capacitor provided at an output terminal of the chopper circuit 1b.

Additionally, the chopper circuit 1b also functions as a power factor correction (PFC) circuit by the switching operation thereof being controlled by the power-transmission side control unit 6. That is, the chopper circuit 1b extends the conduction interval of the current of the full-wave rectified power to correct a power factor by switching the full-wave rectified power on the basis of the zero cross point of the full-wave rectified power at a frequency sufficiently higher than the frequency of the full-wave rectified power In addition, generally, since it is well known that the chopper circuit 1b functions as a power factor correction circuit, description detailing about the power factor correction principle of the chopper circuit 1b will be omitted herein.

The inverter circuit 2 is a power converter circuit that converts the DC power supplied from the power-transmission side rectifier circuit 1a of the power-transmission side power converter 1 into AC power of a predetermined frequency (driving frequency), on the basis of a switching signal (inverter-driving signal) input from the power-transmission side control unit 6. That is, the inverter circuit 2 converts DC power into AC power at a driving frequency by driving a plurality of switching elements using the above inverter-driving signal. Such an inverter circuit 2 outputs the AC power to the power-transmission side pad 3.

The power-transmission side pad 3 is a circuit having a power-transmission coil 3a and a power-feeding capacitor. The power-transmission coil 3a of the power-transmission coil 3a and the power-feeding capacitor is provided at a position that faces a predetermined place (a place where the power-receiving coil 11a is provided) of the movable body that has stopped at the vehicle stop space.

The power-transmission side current/voltage sensor 4 detects power feeding status information (information (value) on both or any one of a current and a voltage) of the power supplied from the commercial power source to the power-transmission side rectifier circuit 1a, and outputs detection signals showing the detected current and voltage to the power-transmission side control unit 6. As the current sensor, for example, a sensor that measures a magnetic field generated around an electric wire through which a current passes, due to the Hall effect, or a sensor that has a resistor inserted into an electric wire through which a current passes and measures a voltage drop that occurs in the resistor can be used. As the voltage sensor, for example, there is a sensor that divides a voltage by a resistance and converts the divided voltages into digital values using an analog-to-digital (AD) converter.

The power-transmission side communication unit 5 performs short-distance wireless communication with the power-receiving side communication unit 16 of the power-receiving device R. In addition, a communication method between the power-transmission side communication unit 5 and the power-receiving side communication unit 16 is short-distance wireless communication, such as ZigBee (registered trademark) or Bluetooth (registered trademark), or short-distance optical communication using light signals. The power-transmission side communication unit 5 has an antenna in the case of the communication method using electric waves, and has a light-receiving element for communication in the case of the communication method using the light signals.

The power-transmission side control unit 6 is constituted of a central processing unit (CPU), a read-only memory (ROM), a random access memory (RAM), respective parts that are electrically connected to each other, an interface circuit that performs transmission and reception of various signals, and the like. The power-transmission side control unit 6 controls the overall operation of the power-transmission device S by performing various kinds of calculation processing on the basis of various calculation control programs stored in the above ROM, and performing communication with the respective parts. In addition, the details of the operation of the power-transmission side control unit 6 will be described below.

In the power-receiving device R, the power-receiving side pad 11 is a circuit having a power-receiving coil 11a and a power-receiving capacitor. The power-receiving coil 11a is provided in a bottom part, a side part, an upper part, or the like of the movable body, and in a case where the movable body has stopped at a vehicle stop space, the power-receiving coil 11a faces in proximity the power-transmission coil 3a that constitutes the power-transmission device S.

In such a power-receiving side pad 11, the power-receiving coil 11a faces in proximity the power-transmission coil 3a that constitutes the power-transmission side pad 3 and the power-receiving coil 11a is magnetically coupled to the power-transmission coil 3a. That is, the power-receiving side pad 11 wirelessly receives the AC power supplied to the power-transmission coil 3a by the inverter circuit 2 and the AC power according to the coupling coefficient of the power-transmission coil 3a and the power-receiving coil 11a from the power-transmission side pad 3, and outputs the received AC powers to the power-receiving side rectifier circuit 12a. That is, the wireless power-transmitting system is a wireless power-transmitting system based on a magnetic field resonance method, an electromagnetic induction method, or the like.

In the power-receiving device R, the power-receiving side power converter 12 converts the power received from the power-transmission side pad 3 of the power-transmission device S via the power-receiving side pad 11 into power to be supplied to the battery B. Additionally, the power-receiving side power converter 12 is constituted of the power-receiving side rectifier circuit 12a and a filter circuit 12b.

The power-receiving side rectifier circuit 12a is constituted of, for example, a diode bridge, and performs full-wave rectification of the AC power (received power) supplied from the power-receiving side pad 11 to output rectified AC power to the filter circuit 12b. The power supplied from the power-receiving side rectifier circuit 12a to the filter circuit 12b is full-wave rectified power subjected to full-wave rectification by the diode bridge.

The filter circuit 12b is constituted of, for example, a reactor and a capacitor, and removes noise from the full-wave rectified power supplied from the power-receiving side control unit 17 and smoothens the power to output the smoothened power to the battery B. Additionally, the reactor is, for example, a variable reactor.

The load circuit 13 is provided between the filter circuit 12b and the switch 14, and is constituted of, for example, a resistor 13a and a switching element 13b. In the load circuit 13, the switching element 13b is switched between an ON state (connected/closed state) and an OFF state (disconnected/open state) on the basis of control using the power-receiving side control unit 17. The switching element 13b includes, for example, an insulated gate bipolar transistor (IGBT), a bipolar transistor, a metal oxide semiconductor field-effect transistor (MOSFET), or the like. In a case where the switching element 13b is in the ON state, the power supplied wirelessly from the power-transmission device S is supplied to the resistor 13a. In the first embodiment, the DC power output from the filter circuit 12b is supplied to the resistor 13a. For example, the switching element 13b is brought into the ON state when the switch 14 to be described below is in an OFF state. Additionally, it is preferable that the resistance value of the resistor 13a be higher than the rated impedance of the battery B. This is because the power consumed by the resistor 13a can be reduced, and therefore, the resistor 13a can be downsized. In addition, the rated impedance is the range of impedance that can be taken in a desired use situation of the battery B. For example, in a case where the voltage of the battery B is 300 [V] and the desired amount of power supply is 3 [kW], a current of 10 [A] flows to the battery B. Therefore, the impedance of the battery B reaches 30 [Ω]. Since the voltage of the battery B varies in a state of charge (SOC), the impedance of the battery B also varies in accordance with that variation. In a case where desired power is supplied to the battery B, the range of the impedance of the battery B that can be obtained is rated impedance.

The switch 14 is provided between the load circuit 13 and the battery B, and performs switching between an ON state and the OFF state on the basis of control using the power-receiving side control unit 17. The switch 14 is, for example, a switch, an electromagnetic contactor, a breaker, or the like, having a function of opening and closing a circuit, and switches between connection and disconnection between the load circuit 13 and the battery B. The switch 14 is provided, for example, in order to prevent an overcurrent and overvoltage of the battery B. When the switch 14 is brought into the OFF state, connection of the power-receiving device R with the battery B is released.

The power-receiving side current/voltage sensor 15 detects the current and voltage of DC power that is supplied from the filter circuit 12b to the load circuit 13, and outputs the detection signals showing the detected current and voltage to the power-receiving side control unit 17. As the current sensor, for example, a sensor that measures a magnetic field generated around an electric wire through which a current passes, due to the Hall effect, or a sensor that has a resistor inserted into an electric wire through which a current passes and measures a voltage drop that occurs in the resistor can be used. Additionally, as the voltage sensor, for example, there is a sensor that divides a voltage by a resistance and converts the divided voltages into digital values using an AD converter.

The power-receiving side communication unit 16 performs short-distance wireless communication with the power-transmission side communication unit 5 of the power-transmission device S. In addition, a communication method between the power-transmission side communication unit 5 and the power-receiving side communication unit 16 is short-distance wireless communication, such as ZigBee (registered trademark) or Bluetooth (registered trademark), or short-distance optical communication using light signals. The power-receiving side communication unit 16 has an antenna in the case of the communication method using electric waves, and has a light-emitting element for communication in the case of the communication method using the light signals.

The power-receiving side control unit 17 is constituted of a central processing unit (CPU), a read-only memory (ROM), a random access memory (RAM), respective parts that are electrically connected to each other, an interface circuit that performs transmission and reception of various signals, and the like. The power-receiving side control unit 17 controls the overall operation of the power-receiving device R by performing various kinds of calculation processing on the basis of various calculation control programs stored in the above ROM, and performing communication with the respective parts. In addition, the details of the operation of the power-receiving side control unit 17 will be described below.

The battery B is a secondary battery, such as a lithium ion battery, or a nickel hydrogen secondary battery, and charges and stores the DC power supplied from the power-receiving side rectifier circuit 12a. The battery B is connected to an inverter (inverter for traveling) that drives a traveling motor of the movable body and/or a control device that controls the traveling of the movable body, and supplies driving power to the inverter for traveling and/or the control device.

Next, the operation of the wireless power-transmitting system configured in this way will be described in detail.

In this wireless power-transmitting system, the power-receiving side control unit 17 of the power-receiving device R of the movable body brings the switching element 13b of the switch 14 and the load circuit 13 into an OFF state, when power is not transmitted (for example, at the time of the normal operation of the movable body by a driver). The power-transmission side control unit 6 of the power-transmission device S stops the chopper circuit 1b and the inverter circuit 2 when power is not transmitted, that is, when the movable body that is a power-transmission target does not stop at a stopping-and-parking position.

Thereafter, a driver operates the movable body having the power-receiving device R, moves the power-receiving device R to an installation location for the power-transmission device S, and stops the movable body in that location. The power-receiving side control unit 17 of the power-receiving device R grasps an installation position for the power-transmission device S from the output of a position sensor, such as a sound wave sensor or an optical sensor that is not shown. The power-receiving side control unit 17 brings the switch 14 into the ON state from the OFF state if it is detected that the power-receiving device R has moved until the power-receiving device R faces the power-transmission device S based on the output of the position sensor, such as a sound wave sensor or an optical sensor, as described above.

The power-transmission side control unit 6 of the power-transmission device S grasps the position of the power-receiving device R on the basis of the output of a position sensor, such as a sound wave sensor or an optical sensor that is not shown, similar to the power-receiving device R. The power-transmission side control unit 6 drives the chopper circuit 1b and the inverter circuit 2 if it is detected that the power-receiving device R has moved until the power-receiving device R faces the power-transmission device S above the power-transmission device S on the basis of the output of the position sensor, such as a sound wave sensor or an optical sensor, and makes the chopper circuit 1b and the inverter circuit 2 start a power transmission operation.

The power-receiving side control unit 17 of the power-receiving device R determines an overvoltage or an overcurrent to the battery B, on the basis of a detection signal input from the power-receiving side current/voltage sensor 15. The power-receiving side control unit 17 brings the switch 14 into the OFF state from the ON state in order to protect the battery B in a case where it is determined that an overvoltage or an overcurrent to the battery B is generated Subsequently, the power-receiving side control unit 17 makes the power-receiving side communication unit 16 transmit a power transmission stop request, and brings the switching element 13b into the ON state. In addition, not only determination of an overvoltage or an overcurrent that has actually been generated but also erroneous determination based on a sequence error or error data of the power-receiving side current/voltage sensor 15 are included in the determination of an overvoltage or an overcurrent. Additionally, the state of the switch 14 is not limited to being switched on the grounds of an overvoltage or an overcurrent, and may be switched on the grounds of, for example, the temperature rise of the battery B.

If the power-transmission side control unit 6 receives the power transmission stop request from the power-receiving device R, the power-transmission side communication unit 5 of the power-transmission device S stops the driving of the chopper circuit 1b and the inverter circuit 2 to make the chopper circuit 1b and the inverter circuit 2 stop the power transmission operation.

In the power-receiving device R, the switching element 13b is brought into the ON state when the power-receiving side communication unit 16 is made to transmit a power transmission stop request. Therefore, the power from the power-transmission device S is supplied to the resistor 13a and consumed until transmission of power by the power-transmission device S is stopped.

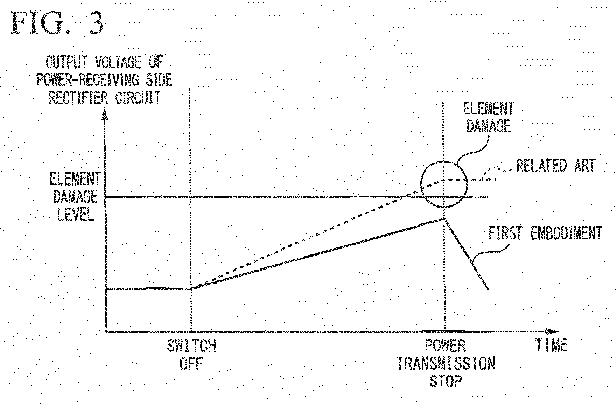

For example, in a case where the resistor 13a is not connected to the power-receiving side power converter 12 as in the related art, the voltage of the power-receiving side pad 11 or the power-receiving side power converter 12 of the power-receiving device R rises before power transmission is actually stopped after the power-receiving side communication unit 16 transmits a power transmission stop request (refer to FIG. 3). This is because the switch 14 is in the OFF state, and therefore, the power supplied from the power-transmission device S to the power-receiving device R is not supplied to the battery B and is not consumed. As a result, the voltage of elements that constitute the power-receiving side pad 11 or the power-receiving side power converter 12 of the power-receiving device R rises and the elements are damaged.

In the first embodiment, even if supply power is not supplied to the battery B in the OFF state of the switch 14, power is consumed by the resistor 13a. Therefore, a rise in the voltage of the elements that constitutes the power-receiving side pad 11 or the power-receiving side power converter 12 of the power-receiving device R is suppressed.

In a case where the switching element 13b is in the ON state, the resistor 13a has such a resistance value that prevents the voltage of the elements of the power-receiving side pad 11 or the power-receiving side power converter 12 docs not reach a breakdown voltage until a power transmission stop request is transmitted from the power-receiving device R to the power-transmission device S and power transmission is stopped.

Specifically, the resistance value of the resistor 13a is determined by the following method in a design stage or the like.

First, the time before power transmission is stopped through the transmission of the power transmission stop request after the switch 14 is switched to the OFF state is calculated. Next, a resistor having a resistance value considered not to reach the breakdown voltage of an element (for example, an element with a lowest breakdown voltage) with a highest possibility of damage in the power-receiving side pad 11 or the power-receiving side power converter 12 is provided, and it is confirmed whether or not the breakdown voltage of the element with the highest possibility of damage is exceeded within the calculated time. In a case where the breakdown voltage is not exceeded, the resistance value is gradually raised, it is confirmed whether or not the breakdown voltage of the element with the highest possibility of damage is exceeded within the calculated time, and the highest resistance value that does not exceed the breakdown voltage of the element with a high possibility of damage within the calculated time is derived. Since heat generation of the resistor 13a is suppressed as the resistance value thereof becomes higher, surface area can be made small. That is, the resistor 13a can be made smaller as the resistance value thereof becomes higher.

Additionally, in a case where the switch 14 is controlled by a control device different from the power-receiving side control unit 17, the power-receiving side control unit 17 may determine whether or not the switching element 13b is brought into the ON state on the basis of the detection signal input from the power-receiving side current/voltage sensor 15. That is, the power-receiving side control unit 17 brings the switching element 13b into the ON state in a case where a voltage detected by the power-receiving side current/voltage sensor 15 rises and exceeds a threshold value when the switch 14 is brought into the OFF state from the ON state at the time of power transmission (refer to FIG. 3). In this case, the power-receiving side control unit 17 makes the power-receiving side communication unit 16 transmit a power transmission stop request, similar to the above operation.

According to the first embodiment, the power-receiving device R includes the load circuit 13 constituted of the resistor 13a and the switching element 13b that are connected in series between a pair of output terminals of the power-receiving side power converter 12. The switching element 13b is switched from the disconnected state to the connected state if the power-receiving device R and the battery B are disconnected from each other. The resistor 13a has such a resistance value that the voltage of the elements of the power-receiving side pad 11 or the power-receiving side power converter 12 does not reach the breakdown voltage before the power-transmission device S stops power transmission to the power-receiving device R after the power-receiving device R and the battery B are disconnected from each other. Accordingly, damage to the elements in the power-receiving device R can be prevented.

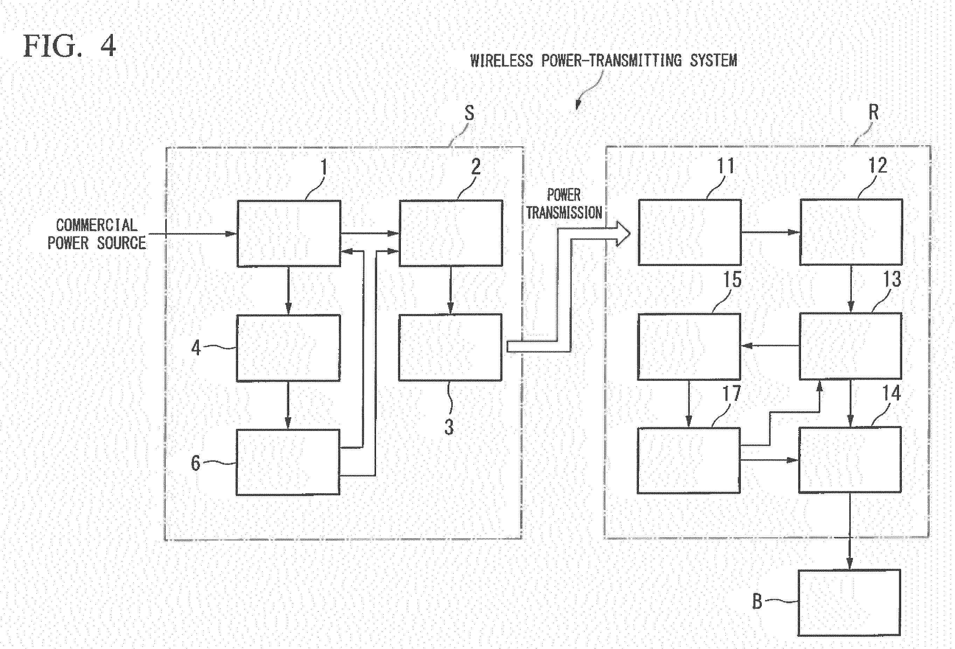

Next, a wireless power-transmission system related to a second embodiment of this disclosure will be described with reference to Figs. 4 to 6.

In addition, in the description of the second embodiment to be described below, description will be made with the same reference numerals given to the same parts as those of the above first embodiment, and duplicate description will be omitted.

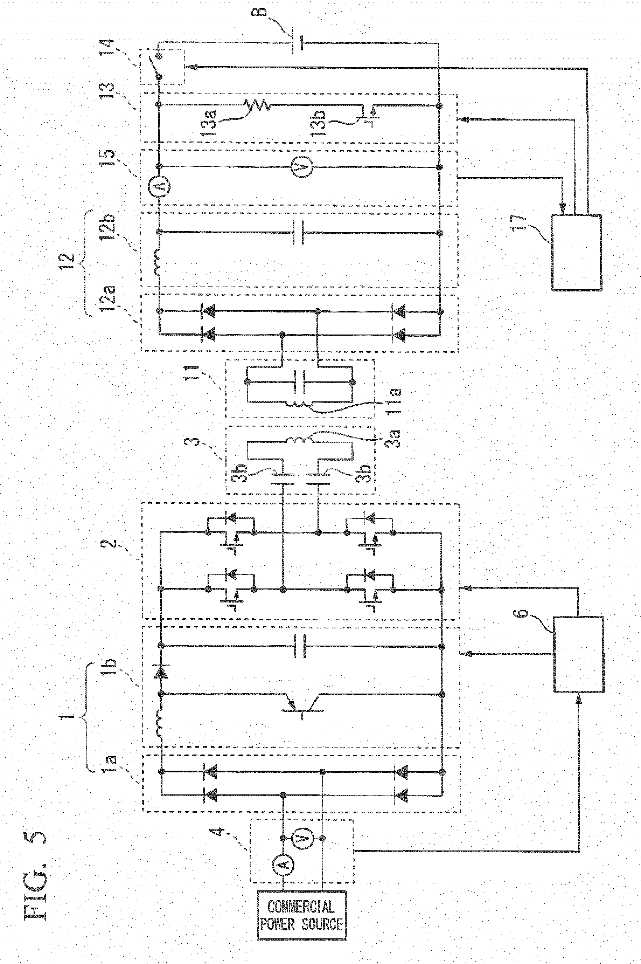

The wireless power-transmitting system related to the second embodiment, as shown in Figs. 4 and 5, is constituted by the power-transmission device S and the power-receiving device R. Additionally, as shown, the power-transmission device S is constituted of the power-transmission side power converter 1, the inverter circuit 2, the power-transmission side pad 3, the power-transmission side current/voltage sensor 4 (detecting unit), and the power-transmission side control unit 6.

The power-receiving device R is constituted of the power-receiving side pad 11, the power-receiving side power converter 12, the load circuit 13, the switch 14, the power-receiving side current/voltage sensor 15, and the power-receiving side control unit 17.

The power-receiving side control unit 17 of the power-receiving device R in the second embodiment determines an overvoltage or an overcurrent to the battery B, on the basis of the detection signal input from the power-receiving side current/voltage sensor 15. The power-receiving side control unit 17 brings the switch 14 into the OFF state from the ON state in order to protect the battery B in a case where it is determined that an overvoltage or an overcurrent to the battery B is generated. Subsequently, the power-receiving side control unit 17 brings the switching element 13b into the ON state. In addition, not only determination of an overvoltage or an overcurrent that has actually been generated but also erroneous determination based on a sequence error or error data of the power-receiving side current/voltage sensor 15 are included in the determination of an overvoltage or an overcurrent. Additionally, the state of the switch 14 is not limited to being switched on the grounds of an overvoltage or an overcurrent, and may be switched on the grounds of, for example, the temperature rise of the battery B. Moreover, the opening of the switch 14 may be not only intentionally performed by the power-receiving side control unit 17 but also unintentionally performed depending on the malfunction of the switch 14, or the like.

The power-transmission side control unit 6 of the power-transmission device S determines whether or not a current (power transmission status information) exceeds a threshold value on the basis of a detection signal input from the power-transmission side current/voltage sensor 4. That is, in the wireless power-transmitting system, the switch 14 of the power-receiving device R is brought into the OFF stage, the switching element 13b is brought into the ON state, and the resistor 13a is connected to the power-receiving side power converter 12. That is, the power transmitted wirelessly from the power-transmission device S is supplied to the resistor 13a. Accordingly, a change in impedance occurs in the power-receiving device R. A current detected by the power-transmission side current/voltage sensor 4 of the power-transmission device S also changes with the change in impedance. The power-transmission side control unit 6 detects the change in current.

Then, if the power-transmission side control unit 6 determines that the current exceeds the threshold value on the basis of the detection signal input from the power-transmission side current/voltage sensor 4, the power-transmission side control unit 6 stops the driving of the chopper circuit 1b and the inverter circuit 2, and makes the chopper circuit 1b and the inverter circuit 2 stop the power transmission operation.

In addition, the power-transmission side control unit 6 may obtain power from information on the current and the voltage (power transmission status information) obtained from the power-transmission side current/voltage sensor 4, and may stop the driving of the chopper circuit 1b and the inverter circuit 2 on the basis of the power. That is, if the power-transmission side control unit 6 determines that the power based on the detection signal input from the power-transmission side current/voltage sensor 4 exceeds the threshold value, the driving of the chopper circuit 1b and the inverter circuit 2 may be stopped.

Additionally, the power-transmission side control unit 6 may use a voltage instead of the current, as a determination target. That is, if the power-transmission side control unit 6 determines that the power (power transmission status information) exceeds the threshold value on the basis of the detection signal input from the power-transmission side current/voltage sensor 4, the driving of the chopper circuit 1b and the inverter circuit 2 may be stopped.

In the power-receiving device R, since the switching element 13b is brought into the ON state when the switch 14 is brought into the OFF state, the power from the power-transmission device S is supplied to the resistor 13a and consumed until transmission of power by the power-transmission device S is stopped.

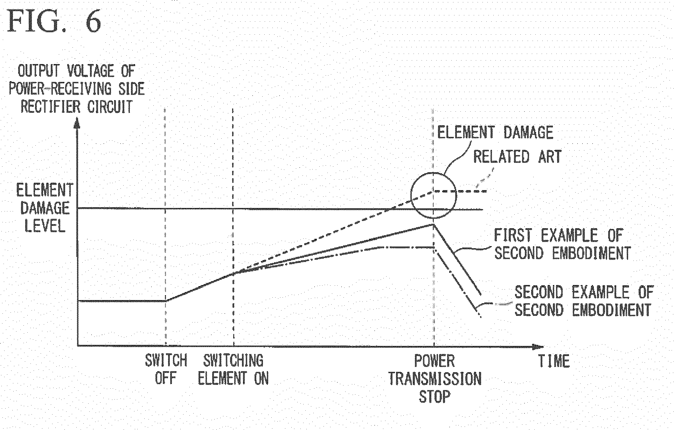

For example, in a case where the resistor 13a is not connected to the power-receiving side power converter 12 as in the related art, the voltage of the power-transmission side power converter 1, the inverter circuit 2, or the power-transmission side pad 3 of the power-transmission device S or the voltage of the power-receiving side pad 11 or the power-receiving side power converter 12 of the power-receiving device R rises until the switch 14 is brought into the OFF state and power transmission is actually stopped (refer to FIG. 6). This is because the switch 14 is in the OFF state, and therefore, the power supplied from the power-transmission device S to the power-receiving device R is not supplied to the battery B and is not consumed. As a result, the voltage of elements that constitute the power-transmission side power converter 1, the inverter circuit 2, or the power-transmission side pad 3 of the power-transmission device S or the power-receiving side pad 11 or the power-receiving side power converter 12 of the power-receiving device R rises, and if the voltage exceeds an element damage level, the elements are damaged.

In the second embodiment, power is consumed by the resistor 13a even if supply power is not supplied to the battery B in the OFF state of the switch 14. Therefore, a rise in the voltage of the elements that constitutes the power-transmission side power converter 1, the inverter circuit 2, or the power-transmission side pad 3 of the power-transmission device S or the power-receiving side pad 11 or the power-receiving side power converter 12 of the power-receiving device R is suppressed.

The resistor 13a has such a resistance value that the voltage of the internal elements in the power-transmission device S and the power-receiving device R does not reach a breakdown voltage before the transmission of power to the power-receiving device R by the power-transmission device S is stopped after the switch 14 is brought into the OFF state.

Specifically, the resistance value of the resistor 13a is determined by the following method in a design stage or the like.

First, the time until the switch 14 is switched to the OFF state and power transmission is stopped is calculated. Next, the resistor 13a having a resistance value considered not to reach the breakdown voltage of an element (for example, an element with a lowest breakdown voltage) with a highest possibility of damage in the power-transmission side power converter 1, the inverter circuit 2, or the power-transmission side pad 3 of the power-transmission device S or the power-receiving side pad 11 or the power-receiving side power converter 12 of the power-receiving device R is provided, and it is confirmed whether or not the breakdown voltage of the element with the highest possibility of damage is exceeded within the calculated time. In a case where the breakdown voltage is not exceeded, the resistance value is gradually raised, it is confirmed whether or not the breakdown voltage of the element with the highest possibility of damage is exceeded within the calculated time, and the highest resistance value that does not exceed the breakdown voltage of the element with the highest possibility of damage within the calculated time is derived. Since heat generation of the resistor 13a is suppressed as the resistance value thereof becomes higher, surface area can be made small. That is, the resistor 13a can be made smaller as the resistance value thereof becomes higher.

Additionally, in a case where the switch 14 is controlled by a control device different from the power-receiving side control unit 17, the power-receiving side control unit 17 may determine whether or not the switching element 13b is brought into the ON state on the basis of the detection signal input from the power-receiving side current/voltage sensor 15. That is, the power-receiving side control unit 17 brings the switching element 13b into the ON state in a case where the voltage detected by the power-receiving side current/voltage sensor 15 rises and exceeds a threshold value when the switch 14 is brought into the OFF state from the ON state at the time of power transmission (refer to FIG. 6).

In addition, although the switching element 13b is brought into the ON state, and consequently, an output voltage drawn as a first example of the second embodiment shown in FIG. 6 rises more gently than in the related art, the output voltage continues rising until power transmission stops. The switching element 13b is brought into the ON state, and consequently, an output voltage drawn as a second example of the second embodiment shown in FIG. 6 rises gently. If the output voltage rises up to a certain voltage, the rise thereof stops and the output voltage is brought into a stable state. A difference between the changes of the output voltages in the first example and the second example of the second embodiment is caused depending on a difference between the resistance values of the resistors 13a.

Additionally, the timing of power transmission stop varies depending on the threshold value that is used in order for the power-transmission side control unit 6 to detect a change in a current, a voltage, or power. For example, depending on the threshold value, power transmission may be stopped before the switching element 13b is brought into the ON state, and power transmission may be stopped after the switching element 13b is brought into the ON state. In addition, the threshold value in a case when power transmission is stopped before the switching element 13b is brought into the ON state is a low value compared to the threshold value in a case where power transmission is stopped after the switching element 13b is brought into the ON state.

According to such a second embodiment, in a case where the switch 14 is brought into the OFF state, the switching element 13b of the load circuit 13 is brought into the ON state. Accordingly, a change in impedance occurs in the power-receiving device R. A current detected by the power-transmission side current/voltage sensor 4 of the power-transmission device S also changes with the change in impedance. Then, if the power-transmission side control unit 6 of the power-transmission device S determines that the current exceeds the threshold value on the basis of the detection signal input from the power-transmission side current/voltage sensor 4, power transmission to the power-receiving device R is stopped. That is, since the power-transmission device S determines the stop of power transmission, the power-receiving device R does not need to transmit a power feeding stop request to the power-transmission device S. Therefore, due to the time delay of communication between the power-receiving device R and the power-transmission device S, the voltage of the elements of the power-transmission device S or the power-receiving device R does not rise, and these elements are not damaged.

Additionally, in the technique of the Patent Document 2, power transmission is stopped without receiving a notice via communication from the power-receiving device. Thus, a time delay of communication does not occur before power transmission using the power-transmission device is stopped after the switch is brought into the open state. However, in the technique of the Patent Document 2, the time before impedance varies and a change in current is detected by the power-transmission device, or the time of signal processing of the power-transmission device is present after the switch is brought into the open state. Therefore, in a case where a voltage rises spontaneously with the opening of the switch, the elements of the power-transmission device or the power-receiving device may be damaged until power transmission is stopped. According to the present second embodiment, in a case where the switch 14 is brought into the OFF state, the switching element 13b of the load circuit 13 is brought into the ON state. Accordingly, the power from the power-transmission device S is consumed by the resistor 13a. Therefore, a rise in spontaneous voltage caused by the opening of the switch 14 is suppressed, and damage to the elements of the power-receiving device R or the power-transmission device S can be prevented before power transmission is stopped after the switch 14 is brought into the open state.

Additionally, according to the second embodiment, in the power-receiving device R, the load circuit 13 is provided in the subsequent stage of the power-receiving side power converter 12. That is, by providing the load circuit 13 in the preceding stage of the power-receiving side power converter 12, the power consumed by the resistor 13a does not become AC power, but the power consumed by the resistor 13a becomes DC power. In this way, in the second embodiment, by making the power consumed by the resistor 13a as DC power, it is possible to avoid that heat generation increases under the influence of a skin effect in a case where the power consumed by the resistor 13a is AC power. Additionally, according to the second embodiment, a change in the resistance value of the resistor 13a caused by heat can be suppressed by avoiding the increase of heat generation.

Although the embodiments of the disclosure have been described above, the disclosure is not limited to the above embodiments, and, for example, variant examples as follows may be considered.
(1) In the power-transmission device S, the chopper circuit 1b is used as a voltage converter. Instead of the chopper circuit 1b that is a non-insulated voltage converter, however, a voltage transducer that is an insulated voltage converter may be used. Additionally, in the power-transmission device S, a full bridge is used as the power-transmission side rectifier circuit 1a or the power-receiving side rectifier circuit 12a. Instead of the full bridge, however, a half bridge may be used. Additionally, in the above embodiment, the power-receiving side power converter 12 is constituted of the power-receiving side rectifier circuit 12a and the filter circuit 12b. However, a voltage converter may be provided in the subsequent stage of the filter circuit 12b according to the load device. In a case where the voltage converter is provided, the load circuit 13 may be arranged in the preceding stage of the voltage converter or may be arranged in the subsequent stage of the voltage converter.
   Additionally, although the battery B is provided as the load device, a DC load or an AC load other than the battery B may be used. In addition, in a case where the AC load is provided, it is necessary to provide a configuration in which AC power is output from the power-receiving side power converter 12. Additionally, although the commercial power source that is an AC power source is used, a DC power source may be used. In addition, in a case where the DC power source is provided, it is necessary to eliminate the power-transmission side rectifier circuit 1a from the power-transmission side power converter 1. In this case, the power-transmission side current/voltage sensor 4 detects the voltage and current of DC power that is input to the power-transmission side power converter 1 from the DC power source.
(2) In the above embodiment, as a modification example, it is determined whether or not the power-receiving side control unit 17 brings the switching element 13b into the ON state on the basis of a detection result obtained by the power-receiving side current/voltage sensor 15 provided in the subsequent stage of the filter circuit 12b. However, the disclosure is not limited to this. For example, a voltage sensor may be provided between the power-receiving side pad 11 and the power-receiving side rectifier circuit 12a or between the power-receiving side rectifier circuit 12a and the filter circuit 12b, and the power-receiving side control unit 17 may determine whether or not the switching element 13b is brought into the ON state on the basis of the detection result obtained by the voltage sensor. That is, the power-receiving side control unit 17 brings the switching element 13b into the ON state in a case where the result detected by the voltage sensor exceeds a threshold value. In addition, in a case where the power-receiving side current/voltage sensor 15 detects an alternating voltage, a detection value thereof is, for example, an effective value or a crest value
(3) If a load that consumes power is used as the load, the disclosure is not limited to the resistor 13a. For example, a reactor or the like having the above-described resistance value may be used instead of the resistor 13a.
(4) In the above embodiment, a case where, when the switch 14 is brought into the OFF state, connection with the battery B is released and that the voltage of the elements that constitute the power-receiving side pad 11 and the power-receiving side power converter 12 of the power-receiving device R rises has been described. However, the disclosure is not limited to this aspect. For example, the disclosure can also be applied to a case where, when a wiring line between the load circuit 13 and the battery B is disconnected, connection with the battery B is released and the voltage within the power-receiving device R rises. In this case, the power-receiving side control unit 17 can bring the switching element 13b into the ON state in a case where the voltage detected by the power-receiving side current/voltage sensor 15 exceeds the threshold value. Additionally, the disconnection between the power-receiving device R and the battery B is not limited to perfect disconnection, and also includes a case where a line becomes so thin that supply of desired power becomes difficult, a case where poor contact occurs, or the like.
(5) In the above embodiment, a case where the power-receiving side control unit 17 performs switching between the ON state and OFF state of the switching element 13b on the basis of the detection signal of the power-receiving side current/voltage sensor 15 has been described. However, the switching control of the switching element 13b is not limited to the software control of the power-receiving side control unit 17. For example, the power-receiving side control unit 17 that performs the switching control is made in hardware as a comparator with an operational amplifier to which an output voltage of the load circuit 13 and a predetermined voltage (a reference voltage determined as an overvoltage) are input. The comparator with the operational amplifier has a configuration in which a signal is output in a case where the output voltage of the load circuit 13 becomes equal to or higher than a predetermined voltage. The switching element 13b is switched to the ON state at the time of generation of an overvoltage by connecting the output of the comparator to a control terminal of the switching element 13b, such as an IGBT and a bipolar transistor. In this way, the switching of the switching element 13b can also be realized in hardware irrespective of the software processing of the power-receiving side control unit 17.
(6) In the above embodiment, in the power-transmission device S, if the power-transmission side control unit 6 determines that the current, the voltage, or the power exceeds its threshold value on the basis of the detection signal from the power-transmission side current/voltage sensor 4 provided on the input side of the power-transmission side power converter 1, the driving of the chopper circuit 1b and the inverter circuit 2 is stopped. However, the disclosure is not limited to this. For example, the power-transmission side control unit 6 may stop the driving of the chopper circuit 1b and the inverter circuit 2 in a case where it is determined that the change rate of the current, the voltage, or the power exceeds its threshold value on the basis of the detection signal from the power-transmission side current/voltage sensor 4. Additionally, the power-transmission side current/voltage sensor 4 may be provided not on the input side of the power-transmission side power converter 1 but on an output side of the power-transmission side power converter 1, on an input side (that is, in the preceding stage of the power-feeding capacitor 3b of the power-transmission side pad 3) of the power-transmission side pad 3, or between the power-transmission capacitor 3b and the power-transmission coil 3a of the power-transmission side pad 3).
(7) In the above embodiment, a case where the power-transmission side current/voltage sensor 4 is adopted as the detecting unit has been described. However, this disclosure may not be limited to this aspect, and the detecting unit may be a power sensor.

As the power sensor, for example, a voltage and a current are measured by a voltage sensor and a current sensor, and a sensor averages a value, which is obtained by multiplying the voltage and the current, with time, thereby obtaining power. In this case, the power transmission status information becomes power.

### Industrial Applicability

According to the power-receiving device, the wireless power-transmitting system, and the power-transmission device of this disclosure, damage to the elements can be prevented.

### Reference Signs List

S: POWER-TRANSMISSION DEVICE
R: POWER-RECEIVING DEVICE
B: BATTERY (LOAD DEVICE)
1: POWER-TRANSMISSION SIDE POWER CONVERTER
2: INVERTER CIRCUIT
3: POWER-TRANSMISSION SIDE PAD
4: POWER-TRANSMISSION SIDE CURRENT/VOLTAGE SENSOR (DETECTING UNIT)
5: POWER-TRANSMISSION SIDE COMMUNICATION UNIT
6: POWER-TRANSMISSION SIDE CONTROL UNIT
11: POWER-RECEIVING SIDE PAD
12: POWER-RECEIVING SIDE POWER CONVERTER
13: LOAD CIRCUIT
14: SWITCH
15: POWER-RECEIVING SIDE CURRENT/VOLTAGE SENSOR
16: POWER-RECEIVING SIDE COMMUNICATION UNIT
17: POWER-RECEIVING SIDE CONTROL UNIT
1a: POWER-TRANSMISSION SIDE RECTIFIER CIRCUIT
1b: CHOPPER CIRCUIT
3a: POWER-TRANSMISSION COIL
11a: POWER-RECEIVING COIL
12a: POWER-RECEIVING SIDE RECTIFIER CIRCUIT
12b: FILTER CIRCUIT
13a: RESISTOR (LOAD)
13b: SWITCHING ELEMENT

## Claims

1. A power-receiving device including a power-receiving side pad that receives power transmitted wirelessly from a power-transmission device, and a power-receiving side power converter that converts the power received by the power-receiving side pad and supplies the converted power to a load device, the power-receiving device comprising:
a load circuit, which includes a load and a switching element connected in series, between a pair of output terminals of the power-receiving side power converter,
wherein the switching element switches from a disconnected state to a connected state when the power-receiving device and the load device are disconnected from each other, and
wherein the load of the load circuit has such a resistance value that the voltage of elements of the power-receiving side pad or the power-receiving side power converter does not reach a breakdown voltage until the power-transmission device stops power transmission to the power-receiving device after the power-receiving device and the load device are disconnected from each other.

2. The power-receiving device according to Claim 1, further comprising a control unit that controls the switching element,
wherein the control unit makes the switching element into the connected state in a case where an output voltage of the power-receiving side pad or the power-receiving side power converter exceeds a threshold value.

3. The power-receiving device according to Claim 1, further comprising:
a switch provided between the load circuit and the load device; and
a control unit that controls the switching element,
therein the power-receiving device and the load device are disconnected from each other by the switch becoming in an open state, and
wherein the control unit makes the switching element into the connected state in the above case.

4. The power-receiving device according to any one of Claims 1 to 3,
wherein the power transmission stop request is wirelessly transmitted.

5. A wireless power-transmitting system comprising:
a power-receiving device that supplies wirelessly transmitted power to a load device; and
a power-transmission device that wirelessly transmits power to the power-receiving device,
wherein the power-receiving device includes a load circuit that includes a load and a switching element and in which the wirelessly transmitted power is supplied to the load in a case where the switching element is in a connected state, and
the switching element switches from a disconnected state to the connected state when the power-receiving device and the load device are disconnected from each other, and
wherein the power-transmission device includes
a detecting unit that detects power transmission status information, and
a power-transmission side control unit that stops power transmission to the power-receiving device on the basis of the power transmission status information.

6. The wireless power-transmitting system according to Claim 5,
wherein the load circuit is connected so that DC power flows to the load

7. The wireless power-transmitting system according to Claim 5,
wherein the load of the load circuit is set to such a resistance value that the voltage of an internal element in the power-transmission device or the power-receiving device does not reach a breakdown voltage until the power-transmission device stops power transmission to the power-receiving device after the power-receiving device and the load device are disconnected from each other.

8. The wireless power-transmitting system according to Claim 6,
wherein the load of the load circuit is set to such a resistance value that the voltage of an internal element in the power-transmission device or the power-receiving device does not reach a breakdown voltage until the power-transmission device stops power transmission to the power-receiving device after the power-receiving device and the load device are disconnected from each other.

9. The wireless power-transmitting system according to any one of Claims 5 to 8,
wherein the power transmission status information is a current of AC power input to the power-transmission device.

10. A power-transmission device that wirelessly transmits power to a power-receiving device that supplies wirelessly transmitted power to a load device, the power-transmission device comprising:
a detecting unit that detects power transmission status information; and
a power-transmission side control unit that stops power transmission to the power-receiving device on the basis of the power transmission status information,
wherein the power-receiving device includes a load circuit that includes a load and a switching element and in which the wirelessly transmitted power is supplied to the load in a case where the switching element is in a connected state, and
wherein the switching element is switched from a disconnected state to the connected state when the power-receiving device and the load device are disconnected from each other.
